Europäisches Patentamt

(19) European Patent Office

Office européen des brevets

(11) Numéro de publication : **0 234 987 B1**

(12) **FASCICULE DE BREVET EUROPEEN**

(45) Date de publication du fascicule du brevet :
10.04.91 Bulletin 91/15

(51) Int. Cl.⁵ : **G05D 1/00**

(21) Numéro de dépôt : **87400138.1**

(22) Date de dépôt : **21.01.87**

(54) **procédé et dispositif pour le guidage sur piste d'un aérodyne, notamment au cours de la phase de roulage précedant le décollage.**

(30) Priorité : **06.02.86 FR 8601929**

(43) Date de publication de la demande :
**02.09.87 Bulletin 87/36**

(45) Mention de la délivrance du brevet :
**10.04.91 Bulletin 91/15**

(84) Etats contractants désignés :
**DE GB IT NL**

(56) Documents cités :
**US-A- 3 107 514**
**US-A- 3 837 603**

(73) Titulaire : **SEXTANT AVIONIQUE S.A.**
**Immeuble le Galilée Parc Tertiaire de Meudon**
**5/7 rue Jeanne Braconnier**
**F-92366 Meudon la Forêt Cédex (FR)**

(72) Inventeur : **Pont, Patrick**
**75, rue du Javelot Tour Athènes**
**F-75645 Paris Cédex 13 (FR)**
Inventeur : **Lebrun, Jean-Louis**
**14 Boulevard Colbert**
**F-92160 Anthony (FR)**

(74) Mandataire : **Marquer, Francis et al**
**Cabinet Moutard 35, Avenue Victor Hugo**
**F-78960 Voisins le Bretonneux (FR)**

## Description

La présente invention concerne un procédé et un dispositif pour le guidage sur piste, par mauvaise visibilité, d'un aérodyne au cours de la phase de roulage précédant le décollage.

D'une manière générale, on sait que les systèmes actuellement employés pour effectuer les décollages par mauvaise visibilité, par exemple le système décrit dans le brevet US No 3 837 603, utilisent habituellement un système de radioguidage faisant intervenir, d'une part, au sol, un émetteur disposé en bout de piste, qui émet dans l'axe de celle-ci un faisceau hertzien définissant un radioalignement couramment appelé "localiser" et, d'autre part, à bord de l'aérodyne, un système de réception couplé à un détecteur apte à déterminer l'écart angulaire entre l'avion et l'axe de la piste. Cet écart angulaire peut ensuite servir à visualiser un ordre de guidage, par exemple au moyen d'un système de visualisation de type tête haute, sous la forme d'une barre de tendance classique, ou de tout autre système de visualisation connu, tel qu'un système de type "PVD" ("Para Visual Display") ou même d'un système de visualisation par projection de symboles lumineux sur le pare-brise de l'aérodyne.

Or, il s'avère qu'à l'heure actuelle, de nombreuses pistes de décollage ne sont pas dotées de systèmes de radioguidage et ne peuvent pas être utilisées pour des décollages par mauvaise visibilité.

En outre, les pistes disposant de systèmes de radioguidage deviennent inaptes aux décollages par mauvaise visibilité en cas d'arrêt de l'émission du radioalignement, par exemple en raison d'une panne ou de toute autre cause.

L'invention a donc pour but de s'affranchir de ces problèmes grâce à un procédé mettant en oeuvre un dispositif de guidage totalement embarqué qui permet de déterminer un écart piste synthétique (position de l'aérodyne/axe de la piste) sans l'aide d'un quelconque équipement au sol.

Elle part de la constatation que les systèmes de navigation utilisés à l'heure actuelle font de plus en plus souvent intervenir des centrales inertielles dont les informations sont exploitées par des calculateurs de bord, notamment en vue de déterminer la position de l'aérodyne.

Toutefois, jusqu'ici, il n'a jamais été envisagé d'utiliser ces systèmes de navigation pour le guidage sur piste et, en particulier, pour déterminer l'écart angulaire ou métrique entre la position de l'aérodyne et l'axe de la piste, ne serait-ce que du fait qu'en l'absence d'informations émises par des installations au sol, on ne dispose, à bord de l'aérodyne, d'aucun paramètre relatif à l'axe de la piste et à son orientation.

L'invention propose cependant, en vue de résoudre ce problème, une solution qui permet avantageusement d'utiliser le système de navigation inertielle équipant l'aérodyne pour effectuer son guidage sur piste, par mauvaise visibilité, au cours de la phase de roulage précédant le décollage.

Selon l'invention, ce procédé comprend plus particulièrement au moins les deux étapes successives suivantes :

– une première étape, dite étape d'apprentissage, au cours de laquelle l'aérodyne amorce à basse vitesse la phase de roulage et est guidé à vue par le pilote dans l'axe de la piste, tandis que le calculateur effectue, à partir des informations fournies par la centrale, l'estimation d'un paramètre définissant l'azimut réaligné de l'axe de la piste pour tenir compte de l'erreur de faux Nord de la centrale, puis mémorise ce paramètre à la fin de l'étape, et

– une deuxième étape comportant l'élaboration par le calculateur d'un signal d'écart piste synthétique à partir d'informations de vitesse de l'aérodyne délivrées par la centrale et à partir de l'azimut réaligné de l'axe de piste préalablement mémorisé.

Bien entendu le signal écart piste synthétique ainsi obtenu peut servir à l'élaboration d'un ordre de guidage utilisable par un système de visualisation, par exemple de type tête haute ou par une servocommande de direction de l'aérodyne au sol.

Il convient de noter à ce propos qu'au cours de la première étape, la vitesse de l'aérodyne initialement à l'arrêt va progressivement augmenter en restant cependant suffisamment basse pour que même par mauvaise visibilité, le pilote puisse guider à vue l'aérodyne rigoureusement dans l'axe de la piste.

Par contre, au cours de la deuxième étape, la vitesse de l'aérodyne dépasse le seuil à partir duquel le pilote ne peut plus guider à vue l'aérodyne. Le guidage s'effectue alors grâce à l'écart piste synthétique élaboré par le calculateur.

Le problème qu'il convient alors de résoudre pour la mise en oeuvre de l'invention est celui de la détermination de l'écart piste synthétique. En effet, les centrales inertielles équipant à l'heure actuelle les aérodynes ne présentent pas une précision suffisante pour permettre un guidage sur piste, principalement en raison des deux causes d'erreurs suivantes :

– une première cause d'erreurs due à des défauts d'alignement de la centrale inertielle en azimut (écart entre le Nord vrai et le Nord déterminé par la centrale) ;

– une deuxième cause d'erreurs affectant les vitesses Nord et Est déterminées par la centrale, les erreurs de ce type étant bornées mais évolutives dans le temps (sinusoïde de Schüler).

Ainsi, selon une autre caractéristique de l'invention, pour éliminer la première cause d'erreurs, le procédé peut comprendre :

a) au cours de l'étape d'apprentissage :

– la détection par la centrale des vitesses Nord et Est (VN et VE) ainsi que de l'azimut $\Psi 0$ de l'avion arrêté au bout de la piste et aligné le mieux possible avec l'axe de la piste ;

– l'estimation par le calculateur de la vitesse transverse vT de l'aérodyne, grâce à une relation du type :

$$vT = VE \cos \Psi 0 - VN \sin \Psi 0 \;;$$

– le calcul de l'écart Y0* vu par la centrale entre l'aérodyne et l'axe de la piste par intégration dans le temps de la vitesse transverse vT et ce, au cours de la phase d'apprentissage ;

– le calcul de la distance D parcourue au sol par l'aérodyne par intégration dans le temps de la vitesse sol VG de l'aérodyne et ce, au cours de la phase d'apprentissage ;

– la détermination, par le calculateur, à la fin de la période d'apprentissage, de l'erreur de route à l'aide d'une relation du type :

$$\Delta\Psi 0^* = \frac{Y0*}{D}$$

– la mémorisation de cette erreur de route $\Delta\Psi 0$ ;

b) au cours de la deuxième étape :

– l'estimation de la vitesse transversale $\hat{v}T$ corrigée de l'erreur de route $\Delta\Psi 0^*$, grâce à une relation du type :

$$\hat{v}T = VE \cos (\Psi 0 - \Delta\Psi 0^*) - VN \sin (\Psi 0 - \Delta\Psi 0^*) \;;$$

– l'élaboration, à partir de cette vitesse transversale, d'un signal écart piste synthétique permettant le guidage de l'aérodyne.

Par ailleurs, pour tenir compte des erreurs affectant les vitesses Nord et Est, le procédé selon l'invention peut en outre comprendre une première étape supplémentaire précédant immédiatement l'étape d'apprentissage, au cours de laquelle, l'aérodyne étant à l'arrêt et aligné le mieux possible dans l'axe de la piste, le calculateur détermine la valeur moyenne de la vitesse Nord et de la vitesse Est. Le résultat de ce calcul correspond aux erreurs affectant ces vitesses, soit $\Delta$VN0 et $\Delta$VE0. Ces valeurs une fois élaborées sont ensuite mémorisées puis retranchées aux valeurs VN et VE acquises au cours de la phase d'apprentissage, et servent à déterminer l'erreur de faux Nord puis l'écart piste synthétique.

Il est clair, toutefois, que cette solution ne permet pas de prendre en compte la variation des erreurs $\Delta$VN0 et $\Delta$VE0 au cours des étapes d'apprentissage et de calcul de l'écart synthétique.

On rappelle à ce sujet que les erreurs affectant les vitesses Nord et Est sont évolutives dans le temps selon la sinusoïde de Schüler dont la période est de l'ordre de 84 mn. Pour estimer ces erreurs, il convient donc de déterminer la position où l'on se trouve sur cette courbe, à l'instant où s'effectue la mesure. Or, le calculateur ne dispose d'aucune information permettant d'effectuer cette estimation.

Pour résoudre ce problème, l'invention propose de rajouter une deuxième étape supplémentaire de mesure à l'arrêt, des erreurs affectant les vitesses Nord et Est, soit $\Delta$VN$_1$, et $\Delta$VE$_1$, par exemple lorsque l'aérodyne se trouve en poste d'embarquement, ou même au cours du trajet vers la piste de décollage. Ainsi, grâce aux valeurs $\Delta$VN$_1$, $\Delta$VN0 et $\Delta$VE$_1$, $\Delta$VE0, le calculateur peut estimer la pente de la sinusoïde de Schüler dans la zone correspondant à ces valeurs et, en conséquence, effectuer les corrections d'erreurs nécessaires, au cours de l'étape d'apprentissage et de l'étape de détermination de l'écart piste de l'aérodyne.

Un mode d'exécution d'un dispositif pour la mise en oeuvre du procédé selon l'invention sera décrit ci-après, à titre d'exemple non limitatif, avec référence aux dessins annexés dans lesquels :

La figure 1 est un diagramme représentant les principaux paramètres intervenant dans le procédé selon l'invention ;

La figure 2 est un schéma de l'organisation d'un calculateur de bord d'un aérodyne avec ses liaisons aux capteurs et au système de visualisation ;

La figure 3 est un schéma blocs du circuit de détermination de la vitesse transverse Y' de l'aérodyne par rapport à l'axe de la piste et du circuit de commande du système de visualisation ;

La figure 4 est un diagramme représentatif de la sinusoïde de Schüler ;

La figure 5 est un schéma blocs théorique de l'unité d'estimation utilisée dans le circuit représenté figure 3.

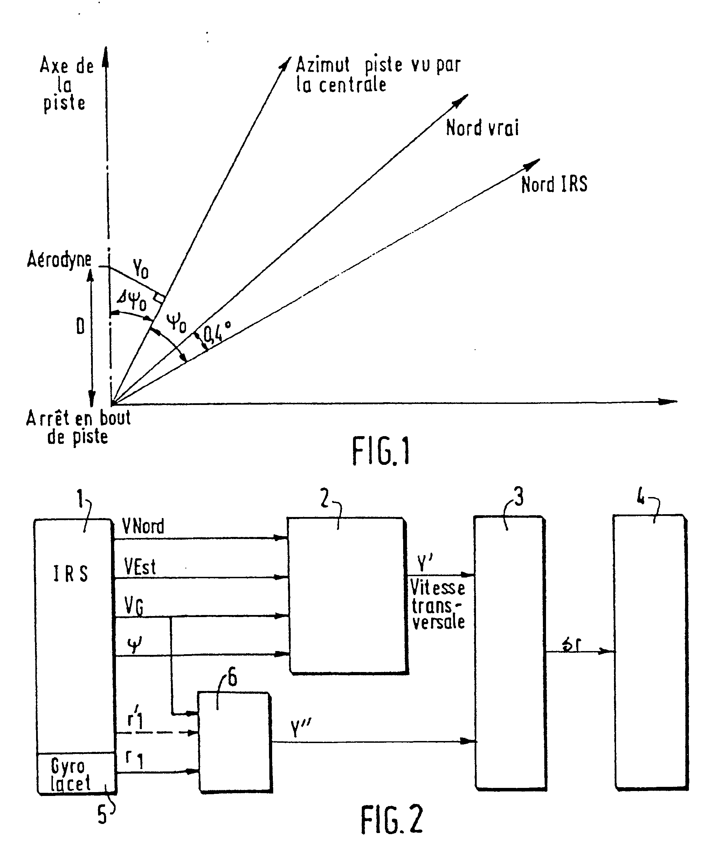

Le diagramme représenté sur la figure 1 permet de mettre en évidence les conséquences de l'une des deux causes d'erreurs principales qui affectent la détermination de l'écart piste synthétique Y.

Ce diagramme indique notamment, par des vecteurs, le Nord géographique vrai ou "Nord Vrai" et le Nord déterminé par la centrale inertielle ("Nord IRS"). Statistiquement, ce Nord IRS peut différer du Nord vrai d'un écart angulaire $\Delta\Psi 0$ de l'ordre de 0,4° en raison d'un défaut d'alignement de la centrale.

On rappelle à ce sujet que, conformément au procédé selon l'invention, l'écart angulaire $\Delta\Psi 0$ est élaboré par le calculateur selon les étapes suivantes :

1) Le calcul de la vitesse transverse vT estimée, par la relation :

$$vT^* = \hat{V}E \cos \Psi 0 - \hat{V}N \sin \Psi 0$$

avec :

$\Psi 0$ qui est l'azimut de l'avion arrêté en bout de la piste et aligné le mieux possible avec l'axe de la piste, cet azimut prenant en référence le Nord IRS,

$\hat{V}E = VE - \Delta VE0$, c'est-à-dire la vitesse Est (VE) détectée, diminuée de l'écart $\Delta VE0$ mesuré alors que l'aérodyne est arrêté en bout de piste et aligné dans l'axe de celle-ci,

$\hat{V}N = VN - VN0$, c'est-à-dire la vitesse Nord VN détectée, diminuée de l'écart $\Delta VN0$ mesuré alors que l'aérodyne est arrêté en bout de piste et aligné dans l'axe de celle-ci.

2) Le calcul de l'écart piste erroné Y0* que fait l'avion avec l'axe de la piste (vu par la centrale) pendant l'étape d'apprentissage, au cours de laquelle l'aérodyne roule le mieux possible à vue dans l'axe de piste vrai (représenté en traits interrompus sur la figure 1). Il est à rappeler à ce sujet qu'en raison de l'erreur de faux Nord, la centrale inertielle indique un azimut $\Psi0$ (azimut centrale) différent de celui de l'aérodyne et, en conséquence, un écart piste erroné Y0*. Cet écart piste erroné est obtenu au moyen de la relation suivante :

$$Y0^* = \int_{t0}^{tfin} vT^* \, dt$$

dans laquelle :

t0 est l'instant où le pilote a actionné la manette des gaz pour amorcer le roulage au sol précédant le décollage,

tfin est l'instant marquant la fin de l'étape d'apprentissage, par exemple l'instant où l'aérodyne atteint la vitesse de 100 noeuds.

3) le calcul de la distance sol D parcourue entre l'instant t0 et l'instant tfin

$$D = \int_{t0}^{tfin} VG \, dt$$

dans laquelle, VG est la vitesse sol de l'aérodyne pouvant être calculée par la centrale ($VG^2 = VN^2 + VE^2$) ou par tout autre moyen.

4) Le calcul de l'écart $\Delta\Psi0$, au moyen de la relation :

$$\Delta\Psi0^* = \frac{Y0^*}{D}$$

Comme précédemment mentionné, cette valeur

$\Delta\Psi0^*$ ainsi que l'azimut réaligné de l'axe de la piste ($\Psi0^* = \Psi0 - \Delta\Psi0^*$) sont mis en mémoire à la fin de la période d'apprentissage pour permettre, après l'étape d'apprentissage, la détermination de l'écart piste Y vrai.

Ces différents calculs peuvent être effectués au moyen du système dont l'organisation est représentée schématiquement sur la figure 2 qui comprend une centrale inertielle 1 délivrant des signaux représentatifs de la vitesse Nord (VNord), de la vitesse Est (VEst), de la vitesse sol VG et de l'azimut réaligné $\Psi0^*$ de la piste.

Ces signaux sont transmis à un calculateur 2 qui détermine la dérivée première Y' de l'écart piste Y, c'est-à-dire de l'écart métrique entre l'aérodyne et l'axe de la piste, cette dérivée première Y' étant obtenue selon la formule :

$$(Y' = \hat{V}T = \hat{V}E \cos(\Psi0^*) - \hat{V}N \sin(\Psi0^*))$$

Ce signal Y' est transmis au bloc de commande 3 du dispositif de visualisation tête haute 4 de l'aérodyne. Ce bloc 3 est conçu pour fournir, au dispositif de visualisation 4, un signal δr d'ordre de guidage, par exemple de la forme $\delta r = K(Y + \tau1 Y' + \tau2 Y'')$, selon une loi de commande déterminée similaire à celle utilisée dans les systèmes de guidage utilisant le radio-lignement ("localiser").

Ce bloc 3 reçoit, par ailleurs, un signal de vitesse de lacet r1 fourni par un gyromètre de lacet 5 à partir duquel est déterminée, à l'aide du signal VG fourni par la centrale 1, la dérivée seconde Y'' de l'écart piste Y. Ce calcul est élaboré dans le bloc 6. Il convient de noter à ce sujet que l'usage du gyromètre de lacet n'est pas obligatoire, le signal de vitesse de lacet pouvant aussi bien être élaboré par la centrale inertielle 1 (liaison $r'_1$ représentée en traits interrompus).

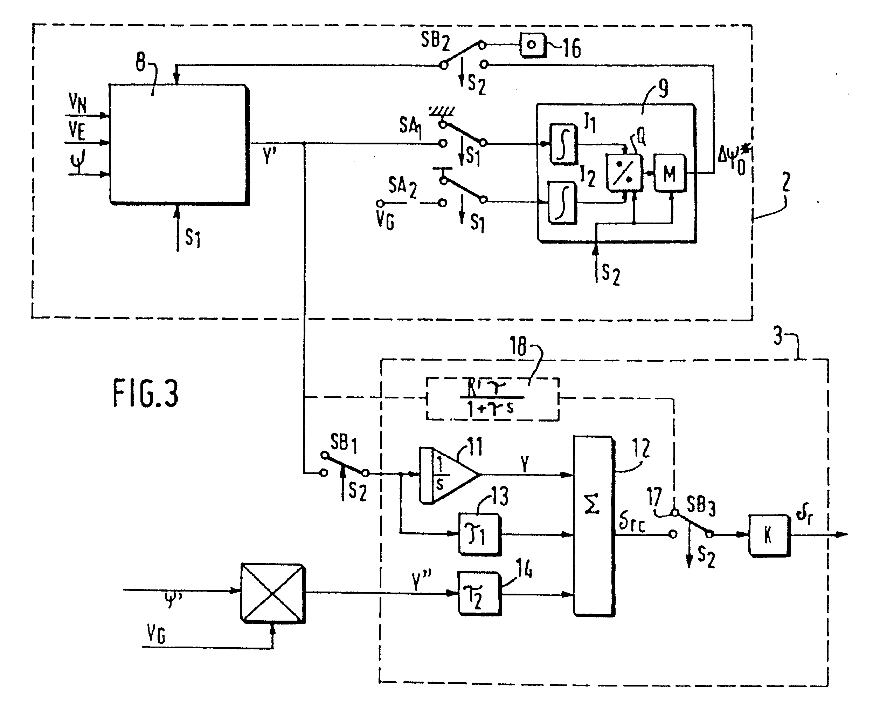

La figure 3 représente schématiquement un exemple d'exécution du calculateur 2 et du bloc de commande 3. Sur cette figure, le calculateur 2 a été divisé en deux unités 8, 9, à savoir : une unité d'estimation 8 de la vitesse transversale Y' de l'aérodyne par rapport à l'axe de la piste, et une unité de calcul 9 de l'erreur $\Delta\Psi0^*$.

L'unité d'estimation 8 reçoit les signaux VN, VE et $\Psi$ fournis par la centrale inertielle 1. Elle élabore le signal Y' et le transmet, d'une part, à l'unité 9 par l'intermédiaire d'un interrupteur $SA_1$ et, d'autre part, au bloc de commande 3 par l'intermédiaire d'un commutateur $SB_1$.

Cette unité d'estimation 8 est, par ailleurs, connectée à la sortie de l'unité 9 au moyen d'un circuit comprenant un commutateur $SB_2$. Elle reçoit par ailleurs un signal de commande $S_1$ dont la fonction sera exposée ci-après.

L'unité de calcul 9 de l'écart $\Delta\Psi0^*$ reçoit en outre un signal représentatif de la vitesse sol VG par l'intermédiaire d'un commutateur $SA_2$ et un signal $S_2$ indi-

quant la fin de l'étape d'apprentissage.

Elle comprend notamment, comme représenté, deux intégrateurs $I_1$ et $I_2$ dont les entrées sont respectivement connectées aux bornes $A_1$, $A_2$ des commutateurs $SA_1$ et $SA_2$ et dont les sorties sont reliées au moment de l'émission du signal $S_2$ aux deux entrées d'un diviseur représenté par le bloc Q. Ces deux intégrateurs sont initialisés à 0 au moment de l'émission du signal $S_1$, c'est à dire à l'instant t0.

La sortie du diviseur Q est quant à elle reliée à l'entrée d'une unité de mémoire M dont l'accès est commandé par le signal $S_2$. Ainsi, à partir de l'instant t0, ces deux intégrateurs effectuent l'intégration dans le temps de la vitesse transverse $vT^*$ et de la vitesse sol VG.

A l'instant tfin déterminé par l'émission du signal $S_2$, ces intégrateurs fournissent donc les valeurs $Y0^*$ et D et, par conséquent, à la sortie du diviseur Q on obtient la valeur $\Delta\Psi0^* = \dfrac{Y0^*}{D}$. Parallèlement, l'unité de mémoire M habilitée à l'écriture par le signal $S_2$ mémorise cette valeur qui, du fait de la commutation de $SB_2$ est appliquée à l'unité d'estimation 8.

A l'entrée du bloc de commande 3, le signal Y' est appliqué (si le commutateur $SB_1$ est fermé) à un intégrateur 11 (fonction de transfert 1/s) qui délivre un signal Y à une première entrée d'un sommateur 12. Cet intégrateur 11 est initialisé à 0 au début de la deuxième étape (au moment où le signal $S_2$ est émis). Ce signal Y' est également transmis à un réseau 13 de constante de temps $\tau1$ connecté par sa sortie à une deuxième entrée du sommateur 12.

La troisième entrée de ce sommateur reçoit, quant à elle, par l'intermédiaire d'un réseau 14 de constante de temps $\tau2$, un signal représentatif de la dérivée seconde Y" du signal d'écart Y, élaboré à partir de la dérivée du signal $\Psi$ fourni par la centrale 1 (ou déterminé à partir d'un gyromètre de lacet) et de la vitesse sol VG de l'aérodyne.

A la sortie du sommateur, on obtient donc un signal δrc de la forme :

$$\delta rc = Y + \tau1\,Y' + \tau2\,Y''$$

Ce signal est ensuite transmis au système de visualisation par l'intermédiaire d'un commutateur $SB_3$ et d'un amplificateur de gain K.

Le fonctionnement du dispositif précédemment décrit est alors le suivant :

A l'entrée de la piste de décollage, le pilote dispose l'aérodyne dans l'axe de la piste et marque un arrêt. Parallèlement, si cela n'est pas déjà fait, il procède à la mise en route du système de guidage, par exemple au moyen d'un bouton.

Au cours de cet arrêt, le calculateur 2 estime les erreurs $\Delta$ VN et $\Delta$ VE dont sont affectées les vitesses Nord et Est ainsi, qu'éventuellement, l'emplacement où l'on se situe à ce moment sur la sinusoïde de Schüler, en vue de déterminer, d'après la pente de cette sinusoïde en cet emplacement, quelle sera la variation des erreurs $\Delta$ VE et $\Delta$ VN au cours du décollage (durée de l'ordre de 30 secondes à 2 minutes).

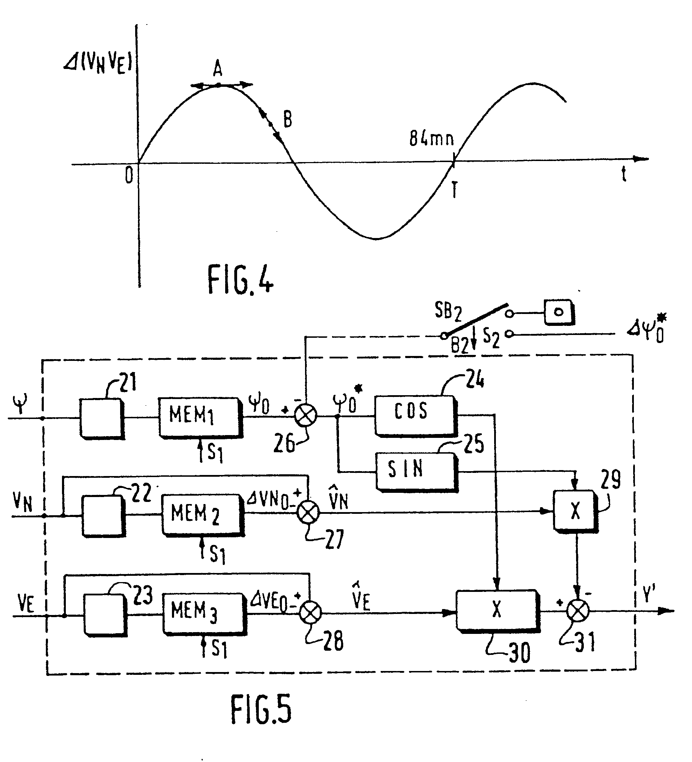

En effet, si l'on se rapporte à la figure 4 qui montre la sinusoïde de Schüler dont la période est de 84 mn, il est clair que si l'on se trouve à l'emplacement A, la variation des erreurs $\Delta$ VN et $\Delta$ VE sera peu importante, alors que si l'on se situe à l'emplacement B, cette variation sera beaucoup plus importante.

En pratique, la détermination de l'emplacement où l'on se trouve sur la sinusoïde de Schüler nécessite la connaissance de deux emplacements sur cette courbe. Or, l'arrêt en bout de piste précédemment mentionné n'est pas prévu suffisamment long pour déterminer deux emplacements assez éloignés pour obtenir un résultat significatif. C'est la raison pour laquelle l'invention propose d'effectuer la détermination du premier point au cours d'un arrêt de l'aérodyne précédant celui effectué en bout de piste. Cet arrêt peut être, par exemple, celui effectué normalement par l'aérodyne dans la zone d'embarquement des passagers. Il peut également être exécuté lors du parcours de l'avion de la zone d'embarquement à la piste de décollage.

Une fois les erreurs $\Delta$ VE, $\Delta$ VN déterminées, l'étape d'apprentissage est amorcée. Elle débute lorsque la manette des gaz de l'aérodyne est placée au maximum et, qu'en conséquence, sous la poussée des moteurs, l'aérodyne commence à rouler dans l'axe de la piste. L'action sur la manette déclenche alors un signal de commande $S_1$ qui est pris en compte par le calculateur 2 et ferme les commutateurs $SA_1$ et $SA_2$. Cette action définit donc l'instant t0 qui constitue la borne inférieure des intégrations effectuées pour déterminer l'écart $Y0^*$ vu par la centrale entre l'aérodyne et l'axe de la piste non réaligné et la distance sol parcourue D.

L'étape d'apprentissage s'effectue au cours d'une période comprise entre l'instant t0 où l'aérodyne est encore à la vitesse 0 et l'instant tfin où il atteint une vitesse prédéterminée, par exemple de 100 noeuds.

Au cours d'une première partie de cette étape, comprise entre l'instant t0 et un instant t1 correspondant à une vitesse prédéterminée, par exemple de 50 noeuds, l'unité d'estimation 8 détermine la vitesse transversale Y' de l'aérodyne par rapport à l'axe de la piste de la façon précédemment indiquée, tandis que l'unité de calcul 9 élabore un signal d'erreur de faux Nord $\Delta\Psi0^*$. Toutefois, ce signal n'est pas réinjecté dans l'unité d'élaboration 8 qui recevra seulement un signal d'erreur nul (bloc 16) du commutateur $SB_2$. Par ailleurs, du fait que les commutateurs $SB_1$ et $SB_3$ sont ouverts, le bloc de commande 3 est déconnecté du dispositif de visualisation, lequel ne fournit aucune information utile au pilotage. Le pilote assure donc le guidage de l'aérodyne uniquement grâce à sa vision de la piste.

Il convient de noter cependant que, pour signaler au pilote que le dispositif fonctionne, il est possible de prévoir une connexion supplémentaire (représentée en traits interrompus) reliant la sortie de l'unité d'estimation 8 à la borne 17 du commutateur SB$_3$, cette connexion comprenant une cellule de filtrage 18 de fonction de transfert du type $\frac{K'\tau}{1+\tau s}$. Cette connexion permet ainsi d'afficher, sur le dispositif de visualisation, une information relative à l'écart transversal Y, cette valeur s'effaçant progressivement, pour disparaître, au bout d'un temps déterminé, par exemple de l'ordre de 2 à 5 secondes.

Dans la deuxième partie de l'étape d'estimation (de 50 à 100 noeuds), le fonctionnement du dispositif de visualisation demeure similaire au précédent.

Toutefois, dans ce cas, la commutation des commutateurs SB$_1$, SB$_2$, SB$_3$ qui marque la fin prématurée de l'étape d'apprentissage (tfin), pourra s'effectuer dans les deux cas suivants :

1. à la suite d'anomalies telles que :
    – une diminution du régime de l'un des moteurs critiques de l'aérodyne due, par exemple, à une panne de ce moteur, provoquant un couple important de lacet,
    – une diminution de la vitesse longitudinale de l'aérodyne, rendant le décollage impossible, sinon dangereux,
    – une accélération latérale prohibitive, par exemple à la suite de l'éclatement d'un pneu,
    – une diminution de la visibilité conduisant le pilote à interrompre le décollage ;

2. lorsque l'aérodyne atteint une vitesse prédéterminée, par exemple de cent noeuds.

Dans ces deux cas, grâce à la fermeture du commutateur SB$_2$, l'erreur de faux Nord $\Delta\Psi0^*$, délivrée par l'unité 9 à la fin de l'étape d'apprentissage, sera transmise à l'unité d'estimation 8 qui élaborera un signal de vitesse transversale Y' corrigé de cette erreur selon le processus qui sera décrit dans la suite en regard de la figure 5.

Du fait de la fermeture du commutateur SB$_1$, ce signal Y' sera transmis au bloc de commande 3 qui transmettra au système d'affichage (le commutateur SB$_3$ étant fermé) le signal de commande δr.

Dans l'exemple représenté sur la figure 3, l'élaboration de la dérivée seconde de l'écart métrique Y s'effectue à partir de la vitesse sol VG et de la dérivée par rapport au temps $\Psi'$ de l'azimut géographique $\Psi$, selon la relation :

$$Y'' = VG \times \left[ \frac{s}{1+s} \Psi \right]$$

Toutefois, dans le cas où l'aérodyne dispose d'une information de vitesse de lacet r1 (centrale ou gyromètre de lacet), cette dérivée seconde pourrait être aussi bien obtenue selon la relation :

$$Y'' = VG \times r1$$

Telle que représentée sur la figure 5, l'unité d'estimation 8 comprend trois unités de mémoire MEM$_1$, MEM$_2$, MEM$_3$, dont les entrées (écriture) reçoivent respectivement les valeurs moyennes glissantes de l'azimut, de la vitesse Nord et de la vitesse Est élaborées à partir des signaux $\Psi$, VN et VE fournis par la centrale inertielle. Le calcul de ces valeurs glissantes est effectué par des circuits représentés par les blocs 21, 22 et 23 qui fournissent à chaque instant une valeur moyenne dans une période de temps prédéterminée qui vient de s'écouler. Les unités de mémoire MEM$_1$, MEM$_2$, MEM$_3$ sont commandées par le signal S$_1$ de manière à ce que lorsque ce signal S$_1$ est émis, elles mémorisent respectivement les valeurs moyennes élaborées par les blocs 21, 22, 23 et qui constituent en fait les valeurs $\Psi0$, $\Delta$VN0 et $\Delta$VE0. La sortie de l'unité de mémoire MEM$_1$ est reliée aux entrées d'un générateur de fonction sinus 25 et d'un générateur de fonction cosinus 24 par l'intermédiaire d'un soustracteur 26 dont l'entrée (–) est raccordée à la borne B$_2$ du commutateur SB$_2$ qui fournit le signal $\Delta\Psi0^*$ lorsque le signal de commande S$_2$ est émis.

Le soustracteur 26 délivrera en conséquence soit le signal $\Psi$ moyen au cours de la phase d'apprentissage et le signal $\Psi0^*= \Psi0 – \Delta\Psi0^*$ lorsque le signal δr est émis.

L'unité de mémoire MEM$_2$ est reliée par sa sortie à l'entrée négative d'un soustracteur 27 qui reçoit par son entrée positive le signal de vitesse Est VE délivré par la centrale. La sortie de ce soustracteur 27 délivrera donc le signal $\hat{V}N = VN – \Delta VN0$.

D'une façon analogue, l'unité de mémoire MEM$_3$ est reliée par sa sortie à l'entrée négative d'un soustracteur 28 dont l'entrée positive reçoit le signal de vitesse Nord VN délivré par la centrale. La sortie de ce soustracteur 28 délivrera en conséquence le signal $\hat{V}E = VE – \Delta VE0$.

La sortie du soustracteur 27 est reliée à une entrée d'un multiplicateur 29 dont l'autre entrée reçoit le signal émis par le générateur de fonction sinus 25.

A la sortie de ce multiplicateur 29, on obtient donc un signal de type $\hat{V}N \sin \Psi0^*$. De même la sortie du soustracteur 28 est reliée à une entrée d'un multiplicateur 30 qui reçoit par ailleurs le signal émis par le générateur de fonction cosinus 24. Ce multiplicateur fournit donc un signal de type $\hat{V}E \cos \Psi0^*$.

Les sorties des deux multiplicateurs 29, 30 sont respectivement reliées aux deux entrées d'un soustracteur 31 qui délivre, en conséquence, selon le cas, le signal :

$\hat{V}T = \hat{V}E \cos \Psi0 – \hat{V}N \sin \Psi0$ pendant l'étape

d'apprentissage

ou

$$Y' = \hat{V}T = \hat{V}E \cos \Psi 0^* - \hat{V}N \sin \Psi 0^*$$ lorsque le signal $S_2$ est émis.

Bien entendu, l'invention ne se limite pas au mode de réalisation précédemment décrit.

Elle pourrait, en effet, faire intervenir deux ou plusieurs centrales inertielles connectées au même calculateur. Celui-ci pourrait, en outre, recevoir des informations pouvant, par exemple, concerner le régime du ou des moteurs de l'aérodyne, la position de la manette des gaz, de manière à émettre le signal de commande $S_1$ des commutateurs $SA_1$, $SA_2$ lorsque la manette des gaz est à sa position maximum et pour émettre le signal de commande $S_2$ lorsque :

– la vitesse sol est supérieure ou égale à 100 noeuds, ou

– la dérivée de la vitesse de rotation d'un moteur critique est inférieure à une valeur négative,

– la dérivée de la vitesse sol par rapport au temps est inférieure à une valeur de seuil prédéterminée, par exemple de 2 noeuds/seconde, ou

– l'accélération latérale de l'aérodyne dépasse une valeur de seuil prédéterminée.

## Revendications

1. Procédé pour le guidage sur piste d'un aérodyne au cours de la phase de roulage précédant le décollage, ce procédé faisant intervenir, à bord de l'aérodyne, au moins une centrale inertielle et un calculateur, caractérisé en ce qu'il comprend au moins les deux étapes successives suivantes :

– une première étape, dite étape d'apprentissage, au cours de laquelle l'aérodyne amorce à basse vitesse la phase de roulage et est guidé à vue par le pilote dans l'axe de la piste, tandis que le calculateur effectue, à partir des informations fournies par la centrale, l'estimation d'un paramètre définissant l'azimut réaligné de l'axe de la piste pour tenir compte de l'erreur de faux Nord de la centrale, puis mémorise ce paramètre à la fin de l'étape, et

– une deuxième étape comportant l'élaboration par le calculateur d'un signal d'écart piste synthétique à partir d'informations de vitesse de l'aérodyne délivrées par la centrale et à partir de l'azimut réaligné de l'axe de piste préalablement mémorisé.

2. Procédé selon la revendication 1, caractérisé en ce que, dans le but de s'affranchir du défaut d'alignement de la centrale inertielle en azimut, il comprend en outre :

a) au cours de la susdite étape d'apprentissage :
– la détection par la centrale des vitesses Nord et Est VN et VE ainsi que de l'azimut $\Psi 0$ de l'avion arrêté en bout de piste et aligné le mieux possible avec l'axe de la piste ;
– l'estimation par le calculateur de la vitesse transverse vT de l'aérodyne par une relation du type :

$$vT = VE \cos \Psi 0 - VN \sin \Psi 0 ;$$

– le calcul de l'écart $Y0^*$ entre l'aérodyne et l'axe de la piste vu par la centrale par intégration dans le temps de la vitesse transversale vT et ce, au cours de la phase d'apprentissage, au cours de laquelle l'aérodyne roule le mieux possible à vue dans l'axe de piste vrai;
– le calcul de la distance D parcourue au sol par l'aérodyne par intégration dans le temps de la vitesse sol VG de l'aérodyne et ce, au cours de la phase d'apprentissage ;
– la détermination, par le calculateur, à la fin de la période d'apprentissage, de l'erreur de route, à l'aide d'une relation du type :

$$\Delta\Psi 0^* = \frac{Y0^*}{D}$$

– la mémorisation de cette erreur de route $\Delta\Psi 0^*$ ;
b) au cours de la deuxième étape :
– l'estimation de la vitesse transversale $\hat{v}T$ corrigée de l'erreur de route $\Delta\Psi 0^*$, grâce à une relation du type :

$$\hat{v}T = VE \cos (\Psi 0 - \Delta\Psi 0^*) - VN \sin (\Psi 0 - \Delta\Psi 0^*) ;$$

– l'élaboration, à partir de cette vitesse transversale, d'un signal écart piste synthétique permettant le guidage de l'aérodyne.

3. Procédé selon l'une des revendications 1 et 2, caractérisé en ce que, dans le but de tenir compte des erreurs affectant les vitesses Nord et Est déterminées par la centrale, il comprend une première étape supplémentaire précédant immédiatement l'étape d'apprentissage, au cours de laquelle l'aérodyne étant à l'arrêt et aligné le mieux possible dans l'axe de la piste, le calculateur détermine la vitesse Nord et la vitesse Est, le résultat de ce calcul fournissant les erreurs affectant ces mesures, soit $\Delta VN0$ et $\Delta VE0$, ces erreurs étant ensuite mémorisées puis retranchées aux valeurs VE et VN calculées au cours de la phase d'apprentissage.

4. Procédé selon l'une des revendications précédentes, caractérisé en ce que, dans le but de tenir compte de l'évolution dans le temps des erreurs affectant les vitesses Nord et Est, il comprend une deuxième étape supplémentaire de mesure à l'arrêt des erreurs affectant les vitesses Nord et Est, l'estimation, lors de la première étape supplémentaire, de la pente de la sinusoïde de Schüler, dans l'intervalle de temps où va s'effectuer le décollage, et la correction des vitesses Nord et Est en fonction de ladite pente.

5. Procédé selon l'une des revendications précédentes, caractérisé en ce que l'étape d'apprentissage comprend deux périodes, à savoir :

– une première période comprise entre un instant t0 où l'aérodyne est à l'arrêt et un instant t1 correspondant à une première vitesse prédéterminée, dans laquelle le signal synthétique d'écart de piste n'est pas émis ; et

– une seconde période comprise entre l'instant t1 et un instant tfin marquant la fin de l'étape d'apprentissage, dans laquelle la fin de la période d'apprentissage intervient prématurément à la suite d'anomalies telles que :

– une diminution de la vitesse de l'un des moteurs critiques de l'aérodyne provoquant un couple important en lacet,

– une diminution de la vitesse longitudinale de l'aérodyne, rendant le décollage impossible, sinon dangereux,

– une accélération latérale prohibitive provoquant une déviation de l'aérodyne,

– une diminution de la visibilité conduisant le pilote à interrompre le décollage.

6. Dispositif pour la mise en oeuvre du procédé selon l'une des revendications précédentes, caractérisé en ce qu'il comprend à bord de l'aérodyne :

1) au moins une centrale inertielle (1) apte à délivrer des signaux représentatifs d'au moins la vitesse Nord (VN), la vitesse Est (VE), l'azimut $\Psi$ de l'aérodyne, ainsi qu'éventuellement, un signal représentatif de sa vitesse sol VG,

2) un calculateur (8, 9) comprenant :

– des moyens d'estimation (8) à partir des signaux délivrés par la centrale, de la vitesse transverse de l'aérodyne ;

– des moyens de détermination (9) de l'erreur de route connectés en sortie des moyens d'estimation (8) par un premier commutateur (SA₁), et connectés à une entrée desdits moyens d'estimation par un second commutateur (SB₂) ;

– des moyens de commande élaborant un signal d'écart piste synthétique connectés aux moyens d'estimation par le second commutateur (SB₁) ;

– lesdits commutateurs étant agencés pour que le calculateur, pendant l'étape d'apprentissage, élabore et mémorise un paramètre réaligné de l'axe de la piste, et pendant la seconde étape, élabore le signal d'écart piste synthétique ; et

– des moyens permettant le guidage de l'aérodyne, pendant la seconde étape, à partir du signal d'écart piste synthétique.

7. Dispositif selon la revendication 6, caractérisé en ce que les susdits moyens de détermination (9) de l'erreur de route comprennent :

– des moyens de calcul de l'écart $\Psi$0 entre l'aérodyne et l'axe de la piste par intégration de la vitesse $\overset{\wedge}{\text{vt}}$ ;

– des moyens de calcul de la distance (D) parcourue au sol par l'aérodyne par intégration de la vitesse sol (VG) de l'aérodyne ;

– des moyens de détermination, à la fin de la période d'apprentissage de l'erreur de route $\Delta\Psi0^*$, grâce à une relation du type :

$$\Delta\Psi0^* = \frac{\Psi0*}{D} ;$$

et en ce que le calculateur comprend des moyens pour la mémorisation de cette erreur de route $\Delta\Psi0^*$.

8. Dispositif selon la revendication 6, caractérisé en ce que le susdit calculateur (8, 9) comprend des moyens pour effectuer, au cours de la seconde étape:

– une correction de la vitesse transverse par l'erreur de route $\Delta\Psi0^*$, et

– l'élaboration du signal piste synthétique à partir de la vitesse transverse corrigée.

9. Dispositif selon l'une des revendications 6 à 8, caractérisé en ce que le susdit calculateur (8, 9) comprend des moyens pour déterminer les erreurs affectant les vitesses Nord et Est déterminées par la centrale pendant une première étape supplémentaire précédant l'étape d'apprentissage, au cours de laquelle l'aérodyne, à l'arrêt, est aligné dans l'axe de la piste et pour retrancher ces erreurs de valeurs (VEst) et (VNord) acquises au cours de la phase d'apprentissage.

10. Dispositif selon l'une des revendications 6 à 9, caractérisé en ce que le susdit calculateur (8, 9) comprend des moyens pour estimer lors de la susdite première étape supplémentaire, la pente de la sinusoïde de Schüler, dans l'intervalle de temps où va s'effectuer le décollage et pour effectuer la correction des vitesses Nord et Est déterminées par la centrale en fonction de ladite pente.

11. Dispositif selon la revendication 6, caractérisé en ce que le susdit calculateur comprend une unité d'estimation (8) apte à élaborer un signal représentatif de la vitesse transverse (Y') de l'aérodyne à partir des informations d'azimut, de vitesse Nord et de vitesse Est fournies par la centrale (1), et des moyens permettant de corriger cette vitesse transverse de l'erreur de route $\Delta\Psi0^*$, et une unité de calcul de l'erreur de route (9) qui reçoit ce signal représentatif de la vitesse transverse par l'intermédiaire d'un premier commutateur (SA₁) et un signal représentatif de la vitesse sol (VG) de l'aérodyne par l'intermédiaire d'un deuxième commutateur (SA₂), ces deux commutateurs (SA₁, SA₂) étant agencés pour passer à l'état fermé lors de l'application d'un signal (S₁) marquant le début de l'étape d'apprentissage (instant t0), et un circuit reliant la sortie de l'unité de calcul (9) aux moyens permettant de corriger la vitesse transverse de l'unité d'estimation (8), ce circuit comprenant un commutateur (SB₂) passant à l'état fermé lors de l'application d'un signal (S₂) qui marque la fin de l'étape d'apprentissage.

12. Dispositif selon la revendication 11, caractérisé en ce que l'unité d'estimation comprend :

- trois unités de mémoire ($MEM_1$, $MEM_2$, $MEM_3$) commandées par le signal ($S_1$) qui reçoivent respectivement des informations représentatives de l'azimut $\Psi$ de la vitesse Nord (VN) et de la vitesse Est (VE), élaborées par la centrale (1),
- un premier soustracteur (26) dont l'entrée positive est connectée à la sortie de la première unité de mémoire ($MEM_1$), dont l'entrée négative est reliée au commutateur ($SB_2$),
- un générateur de fonction sinus (25) et un générateur de fonction cosinus (24) reliés à la sortie du premier soustracteur (26),
- un second soustracteur (27) dont l'entrée négative est reliée à la sortie de la deuxième mémoire ($MEM_2$) et dont l'entrée positive reçoit un signal représentatif de la vitesse Nord élaborée par la centrale (1),
- un troisième soustracteur (28) dont l'entrée négative est reliée à la sortie de la troisième mémoire ($MEM_3$) et dont l'entrée positive reçoit un signal représentatif de la vitesse Est de la centrale (1),
- un premier multiplicateur (29) dont les deux entrées sont respectivement reliées à la sortie du générateur de fonction sinus (25) et à la sortie du susdit second soustracteur (27),
- un second multiplicateur (30) dont les deux entrées sont respectivement reliées à la sortie du générateur de fonction cosinus (24) et à la sortie du susdit troisième soustracteur (28) et,
- un soustracteur (31) dont l'entrée positive est reliée à la sortie du second multiplicateur (30) et dont l'entrée négative est reliée à la sortie du premier multiplicateur (29).

13. Dispositif selon l'une des revendications 11 et 12, caractérisé en ce que la susdite unité de calcul de l'écart ($\Delta\Psi0^*$) comprend deux intégrateurs ($I_1$, $I_2$) initialisés à zéro au moment de l'émission du signal ($S_1$) et respectivement connectés aux susdits commutateurs ($SA_1$ et $SA_2$), et un diviseur (Q) dont les deux entrées sont respectivement connectées au moment de l'émission du signal ($S_2$) aux sorties des deux intégrateurs ($I_1$ et $I_2$) et dont la sortie est reliée à une unité de mémoire (M) commandée de manière à mémoriser le quotient $\dfrac{Y0^*}{D}$ élaboré par le diviseur (Q) au moment de l'émission du signal ($S_2$).

14. Dispositif selon l'une des revendications 1 à 13, caractérisé en ce que la sortie de l'unité d'estimation (8) est connectée à une unité de commande par l'intermédiaire d'un commutateur ($SB_1$) commandé par le signal ($S_2$).

15. Dispositif selon la revendication 14, caractérisé en ce que l'unité de commande comprend un sommateur (12) à trois entrées, à savoir :

- une première entrée connnectée au commutateur ($SB_1$) par l'intermédiaire d'un intégrateur (11) de fonction 1/s,
- une deuxième entrée connectée au commutateur ($SB_1$) par l'intermédiaire d'un réseau (13) de constante de temps ($\tau_1$), et
- une troisième entrée qui reçoit un signal représentatif de la dérivée seconde de l'écart aérodyne/axe de la piste, par l'intermédiaire d'un réseau (14) de constante de temps ($\tau_2$).

16. Dispositif selon la revendication 15, caractérisé en ce que le sommateur (12) est connecté par sa sortie à des moyens permettant le guidage de l'aérodyne, par l'intermédiaire d'un commutateur ($SB_3$) commandé par le signal ($S_2$).

## Ansprüche

1. Verfahren zur Führung eines Luftfahrzeugs auf der Rollbahn, während der Rollführungsphase vor dem Abflug, wobei besagtes Verfahren im Luftfahrzeug mindestens ein Trägheitsnavigationsleitwerk und einen Rechner benutzt, dadurch gekennzeichnet, dass es mindestens die folgenden beiden nacheinander ablaufenden Phasen aufweist :

- eine erste Phase, Lernphase genannt, während derer das Luftfahrzeug bei geringer Geschwindigkeit die Rollphase beginnt und vom Flugzeugführer auf Sicht entlang der Rollbahnachse geführt wird, während der Rechner, auf die vom Trägheitsnavigationsleitwerk gelieferten Informationen gestützt, die Schätzung eines Kennwertes vornimmt, welcher den nachgerichteten Azimut der Rollachse definiert, um die falsche Nordabweichung des Leitwerks einzubeziehen und diesen Kennwert nach Abschluss der Phase speichert, und

- eine zweite Phase, welche die Ausarbeitung durch den Rechner eines Abweichsignals von der synthetischen Rollbahn beinhaltet, ausgehend von die Geschwindigkeit des Luftfahrzeugs betreffenden Informationen des Leitwerks und vom vorher gespeicherten nachgerichteten Azimut der Rollbahnachse.

2. Verfahren nach Anspruch 1, dadurch gekennzeichnet, dass es, um die Azimutausrichtungsabweichung des Trägheitsnavigationsleitwerks zu überwinden, ausserdem aufweist :

a) im Laufe der Lernphase :

Die Erfassung der Nord- und Ostgeschwindigkeiten VN und VE durch das Leitwerk, sowie des Azimuts $\Psi0$ des am Ende der Rollbahn stillstehenden und so gut wie möglich entlang der Rollbahnachse ausgerichteten Flugzeugs,

Die Schätzung, durch den Rechner, der Transversalgeschwindigkeit vT des Luftfahrzeugs, mittels einer Gleichung des Typs :

$$vT = VE \cos \Psi 0 - VN \sin \Psi 0$$

Die Berechnung der Abweichung Y0* des Luftfahrzeugs im Verhältnis zur vom Leitwerk aus gesehenen Rollbahnachse durch die zeitliche Einbeziehung der Transversalgeschwindigkeit vT und dies während der Lernphase, im Laufe derer das Luftfahrzeug so gut wie möglich auf Sicht entlang der wirklichen Rollbahnachse rollt.

Die Berechnung der vom Luftfahrzeug auf dem Boden zurückgelegten Strecke D, durch zeitliche Einbeziehung des Geschwindigkeit am Boden VG des Luftfahrzeugs, und dies während der Lernphase.

Die Ermittlung der Kursabweichung durch den Rechner, am Ende der Lernphase, mittels einer Gleichung des Typs :

$$\Delta\Psi 0^* = \frac{Y0*}{D}$$

Die Speicherung der besagten Kursabweichung $\Delta\Psi 0^*$.

b) Im Laufe der zweiten Phase :

Die Schätzung der Transversalgeschwindigkeit $\hat{VT}$, in der die Kursabweichung $\Delta\Psi 0^*$ korrigiert wurde, mittels einer Gleichung des Typs :

$$\hat{VT} = VE \cos(\Psi 0 - \Delta\Psi 0^*) - VN \sin(\Psi 0 - \Delta\Psi 0^*)$$

Von dieser Transversalgeschwindigkeit ausgehend, die Ausarbeitung eines Abweichsignals von der synthetischen Rollbahn, zur Führung des Luftfahrzeugs.

3. Verfahren nach einem der Ansprüche 1 und 2, dadurch gekennzeichnet, dass es, um den vom Trägheitsnavigationsleitwerk ermittelten Nord- und Ostgeschwindigkeitsabweichungen Rechnung zu tragen, eine erste zusätzliche Phase aufweist, die unmittelbar vor der Lernphase abläuft und im Laufe derer, während das Luftfahrzeug stillsteht und so gut wie möglich entlang der Rollbahnachse ausgerichtet ist, der Rechner die Nordund Ostgeschwindigkeit ermittelt und das Ergebnis dieser Berechnung die Abweichungen mit denen diese Messungen behaftet sind liefert, das heisst $\Delta$ VN0 und $\Delta$ VE0 und diese Abweichungen dann gespeichert und von den im Laufe der Lernphase berechneten Werten VE und VN abgezogen werden.

4. Verfahren nach einem der vorhergehenden Ansprüche, dadurch gekennzeichnet, dass es, um den zeitlichen Veränderungen der Nord- und Ostabweichungen Rechnung zu tragen, eine zusätzliche zweite Messphase während des Stillstandes der Nord- und Ostgeschwindigkeitsabweichungen aufweist, sowie die Schätzung, während der ersten zusätzlichen Phase, des Gefälles der Schülersinuskurve, im Zeitintervall w0 das Flugzeug abhebt und die Korrektur der Nord- und Ostgeschwindigkeit je nach besagtem Gefälle.

5. Verfahren nach einem der vorhergehenden Ansprüche, dadurch gekennzeichnet, dass die Lernphase zwei Perioden aufweist, nämlich :

– eine erste Periode, zwischen dem Zeitpunkt t0, w0 das Luftfahrzeug stillsteht und dem Zeitpunkt t1, der einer ersten vorbestimmten Geschwindigkeit entspricht, während derer das Abweichsignal von der synthetischen Rollbahn nicht abgegeben wird,

– eine zweite Periode, zwischen dem Zeitpunkt t1 und dem Zeitpunkt tfin, der das Ende der Lernphase anzeigt und während derer das Ende der Lernphase vorzeitig eintritt, wenn Anomalien auftreten, wie :

• eine Geschwindigkeitsverminderung eines der kritischen Motoren des Luftfahrzeugs, welche ein bedeutendes Schlingermoment bewirkt,

• eine Verminderung der Längsgeschwindigkeit des Luftfahrzeugs, die das Abheben unmöglich oder zumindestens gefährlich macht,

• eine unzulässige seitliche Beschleunigung, die eine Kursabweichung des Luftfahrzeugs bewirkt,

• eine Sichtverminderung, die den Flugzeugführer den Abhebvorgang abbrechen lässt.

6. Vorrichtung zur Durchführung des Verfahrens nach einem der vorhergehenden Ansprüche, dadurch gekennzeichnet, dass es, an Bord des Luftfahrzeugs aufweist :

1) mindestens ein Trägheitsnavigationsleitwerk (1), das mindestens ein für die Nordgeschwindigkeit (VN), die Ostgeschwindigkeit (VE) und den Azimut ($\Psi$) des Luftfahrzeugs typisches Signal abgeben kann, sowie eventuell ein für dessen Bodengeschwindigkeit VG typisches Signal.

2) einen Rechner (8, 9) mit :

• Mitteln (8), um, aufgrund der vom Trägheitsravigationsleitwerk gelieferten Signale, die Transversalgeschwindigkeit des Luftfahrzeugs zu schätzen,

• Mitteln (9) zur Bestimmung der Kursabweichung, die durch einen ersten Schalter ($SA_1$) an den Ausgang der Schätzungsmittel (8) angeschlossen sind und durch einen zweiten Schalter ($SB_2$) an einen Eingang der besagten Schätzungsmittel,

• Steuermittel, die ein Abweichsignal von der synthetischen Rollbahn ausarbeiten und durch den zweiten Schalter ($SB_1$) an die Schätzungsmittel angeschlossen sind,

und besagte Schalter so angeordnet sind, dass der Rechner während der Lernphase einen nachgerichteten Kennwert der Rollbahnachse ausarbeitet und speichert und während der zweiten Phase ein Abweichsignal von der synthetischen Rollbahn ausarbeitet, und

• Mittel, um das Luftfahrzeug während der zweiten Phase, ausgehend vom Abweichsignal von der synthetischen Rollbahn, zu führen.

7. Vorrichtung nach Anspruch 6, dadurch gekennzeichnet, dass besagte Mittel (9) zur Bestimmung der Kursabweichung aufweisen :

– Mittel zur Berechnung der Abweichung $\Psi 0$ des Luftfahrzeugs von der Rollbahnachse, durch Integration der Geschwindigkeit $\hat{vt}$,

– Mittel zur Berechnung der am Boden vom Luftfahrzeug zurückgelegten Strecke (D), durch Integration der Geschwindigkeit am Boden (VG) des Luftfahrzeugs,

– Mittel, um am Ende der Lernperiode die Kursabweichung $\Delta\Psi 0^*$ mittels einer Gleichung des Typs $\Delta\Psi 0^* = \dfrac{\Psi 0^*}{D}$ zu bestimmen, und dass der Rechner Mittel zur Speicherung dieser Kursabweichung $\Delta\Psi 0^*$ aufweist.

8. Vorrichtung nach Anspruch 6, dadurch gekennzeichnet, dass besagter Rechner (8, 9) Mittel aufweist, um im Laufe der zweiten Phase

– die Transversalgeschwindigkeit durch die Kursabweichung $\Delta\Psi 0^*$ zu korrigieren und

– ausgehend von der korrigierten Transversalgeschwindigkeit, ein synthetisches Rollbahnsignal auszuarbeiten.

9. Vorrichtung nach einem der Ansprüche 6 bis 8, dadurch gekennzeichnet, dass besagter Rechner (8, 9) Mittel aufweist, um die Nord- und Ostgeschwindigkeitsabweichungen zu ermitteln, die vom Trägheitsnavigationsleitwerk während einer ersten zusätzlichen Phase bestimmt wurden, welche der Lernphase vorangeht und während derer das stillstehende Luftfahrzeug entlang der Rollbahnachse ausgerichtet ist, und um diese Abweichungen von, im Laufe der Lernphase erhaltenen, Werten ($V_{Est}$) und ($V_{Nord}$) abzuziehen.

10. Vorrichtung nach einem der Ansprüche 6 bis 9, dadurch gekennzeichnet, dass besagter Rechner (8, 9) Mittel aufweist, um, während der besagten ersten zusätzlichen Phase den Richtungskoeffizienten der Schülersinuskurve während des Zeitabschnittes in dem das Luftfahrzeug abhebt zu bestimmen und um die Korrektur der vom Trägheitsnavigationsleitwerk bestimmten Nord- und Ostgeschwindigkeiten je nach besagtem Richtungskoeffizienten vorzunehmen.

11. Vorrichtung nach Anspruch 6, dadurch gekennzeichnet, dass besagter Rechner eine Schätzeinheit (8) aufweist, die ein Signal ausarbeiten kann, welches typisch ist für die Transversalgeschwindigkeit (Y') des Luftfahrzeugs, ausgehend von den vom Leitwerk (1) gelieferten Azimut-, Nordgeschwindigkeitsund Ostgeschwindigkeitsinformationen ; und Mittel, um besagte Transversalgeschwindigkeit um

die Kursabweichung $\Delta\Psi 0^*$ zu korrigieren ; und eine Einheit (9) zur Berechnung der Kursabweichung, die dieses für die Transversalgeschwindigkeit typische Signal durch einen ersten Schalter (SA$_1$) erhält, und durch einen zweiten Schalter (SA$_2$) ein für die Bodengeschwindigkeit (VG) des Luftfahrzeugs typisches Signal, wobei diese beiden Schalter (SA$_1$, SA$_2$) so ausgelegt sind, dass sie geschlossen werden, wenn ein Signal (S$_1$) angelegt wird, das den Beginn der Lernphase (Zeitpunkt t0) anzeigt : und einen Schaltkreis, welcher den Ausgang der Recheneinheit (9) an die Mittel zur Korrektur der Transversalgeschwindigkeit der Schätzeinheit (8) anschliesst, wobei besagter Schaltkreis einen Schalter (SB$_2$) aufweist, der geschlossen wird, wenn ein Signal (S$_2$) angelegt wird, welches das Ende der Lernphase anzeigt.

12. Vorrichtung nach Anspruch 11, dadurch gekennzeichnet, dass die Schätzeinheit aufweist :

– drei, vom Signal (S$_1$) gesteuerte Speichereinheiten (MEM$_1$, MEM$_2$, MEM$_3$), die jeweils vom Leitwerk (1) ausgearbeitete, fur den Azimut $\Psi$, die Nordgeschwindigkeit (VN) und die Ostgeschwindigkeit (VE) typische Informationen erhalten,

– ein erstes Subtrahierglied (26), dessen positiver Eingang an den Ausgang der ersten Speichereinheit (MEM$_1$) angeschlossen ist, deren negativer Eingang an den Schalter (SB$_2$) angeschlossen ist,

– einen Sinusfunktionserzeuger (25) und einen Kosinusfunktionserzeuger (24), die an den Ausgang des ersten Subtrahiergliedes (26) angeschlossen sind,

– ein zweites Subtrahierglied (27), dessen negativer Eingang an den Ausgang des zweiten Speichers (MEM$_2$) angeschlossen ist und dessen positiver Eingang ein, vom Leitwerk (1) ausgearbeitetes, für die Nordgeschwindigkeit typisches, Signal erhält,

– ein drittes Subtrahierglied (28), dessen negativer Eingang an den Ausgang des dritten Speichers (MEM$_3$) angeschlossen ist und dessen positiver Eingang vom Leitwerk ein für die Ostgeschwindigkeit typisches Signal erhält,

– einen ersten Multiplizierer (29), dessen zwei Eingänge jeweils an den Ausgang des Sinusfunktionserzeugers (25) und des besagten zweiten Subtrahiergliedes (27) angeschlossen sind,

– einen zweiten Multiplizierer (30), dessen zwei Eingänge jeweils an den Ausgang des Kosinusfunktionserzeugers (24) und des besagten dritten Subtrahiergliedes (28) angeschlossen sind, und

– ein Subtrahierglied (31), dessen positiver Eingang an den Ausgang des zweiten Multiplizierers (30) angeschlossen ist und dessen negativer Eingang an den Ausgang des ersten Multiplizierers (29) angeschlossen ist.

13. Vorrichtung nach einem der Ansprüche 11 und 12, dadurch gekennzeichnet, dass die besagte Einheit zur Berechnung der Abweichung ($\Delta\Psi0^*$) zwei Integratoren ($I_1$, $I_2$) aufweist, die zum Zeitpunkt der Abgabe des Signals ($S_1$) nullinitialisiert sind und jeweils an besagte Schalter ($SA_1$ und $SA_2$) angeschlossen sind, sowie einen Divisor (Q), dessen zwei Eingänge jeweils zum Zeitpunkt der Abgabe des Signals ($S_2$) an die Ausgänge der beiden Integratoren ($I_1$ und $I_2$) angeschlossen sind und dessen Ausgang an eine Speichereinheit (M) angeschlossen ist, die so gesteuert wird, dass sie den vom Divisor (Q) im Augenblick der Abgabe des Signals ($S_2$) ausgearbeiteten Quotienten $\frac{Y0^*}{D}$ speichert.

14. Vorrichtung nach einem der Ansprüche 1 bis 13, dadurch gekennzeichnet, dass der Ausgang der Schätzeinheit (8) durch einen vom Signal (S2) gesteuerten SChalter ($SB_1$) an eine Steuereinheit angeschlossen ist.

15. Vorrichtung nach Anspruch 14, dadurch gekennzeichnet, dass die Steuereinheit einen Summator (12) mit drei Eingängen aufweist, und zwar :
- einem ersten Eingang, der an den Schalter ($SB_1$) durch einen Integrator (11) mit der Funktion 1/s angeschlossen ist,
- einem zweiten Eingang, der an den Schalter ($SB_1$) durch ein Netz (13) mit der Zeitkonstante ($\tau_1$) angeschlossen ist, und
- einem dritten Eingang, der ein für den zweiten Differentialquotienten der Luftfahrzeug/Rollbahnachsenabweichung typisches Signal durch ein Netz (14) mit der Zeitkonstante ($\tau_2$) erhält.

16. Vorrichtung nach Anspruch 15, dadurch gekennzeichnet, dass der Summator (12) mit seinem Ausgang an Mittel zur Führung des Luftfahrzeugs angeschlossen ist und zwar durch einen vom Signal ($S_2$) gesteuerten Schalter ($SB_3$).

## Claims

1. A method for guiding an aerodyne on the runway during the taxiing phase preceding take off, this method including, on board the aerodyne, at least one inertial unit and a computer, characterized in that it comprises at least the two following successive steps:
- a first step, called apprenticeship step, during which the aerodyne begins the taxiing phase at low speed and is guided on sight by the pilot along the axis of the runway, whereas, at the same time, the computer makes an estimation of a parameter defining the realigned azimuth the axis of the runway by means of information supplied by the inertial unit for taking into account the false North error of the unit, and then stores this parameter at the end of the step, and
- a second step including the elaboration by the computer of a synthetic runway aberration signal from aerodyne speed information delivered by the unit and based on the realigned azimuth of the runway axis, previously stored.

2. The method as claimed in claim 1, characterized in that it includes for overcoming the alignment defect of the inertial unit in azimuth guidance :
     a) during said apprenticeship step :
       - detection by the unit of the North and East speeds VN and VE as well as the azimuth $\Psi0$ of the aircraft which is stopped at the end of the runway and aligned as well as possible along the axis of the runway ;
       - estimation by the computer of the transverse speed vT of the aerodyne by a relation of the type

$$vT = VE \cos \Psi0 - VN \sin \Psi0 ;$$

       - calculation of the aberration Y0* between the aerodyne and the axis of the runway seen by the unit by integration in time of the transverse speed vT and this during the apprenticeship phase during which the aerodyne taxies as well as possible on sight along the true runway axis.
       - calculation of the distance D travelled overground by the aerodyne by integration in time of the groud speed VG of the aerodyne and this during the apprenticeship phase ;
       - determination, by the computer, at the end of the apprenticeship period, of the course error by means of relation of the type

$$\Delta\Psi0^* = \frac{Y0^*}{D}$$

       - storage of this course error $\Delta\Psi0^*$ ;
     b) during the second step :
     - estimation of the transverse speed $\hat{vT}$ corrected for the course error $\Delta\Psi0^*$, by means of a relation of the type

$$\hat{vT} = VE \cos (\Psi0-\Delta\Psi0^*)-VN \sin (\Psi0-\Delta\Psi0^*) ;$$

       - elaboration from this transverse speed of a synthetic runway aberration signal for guiding the aerodyne.

3. The method as claimed in one of claims 1 and 2, characterized in that it comprises, for taking into account the errors affecting the North and East speeds determined by the unit, a first additional step immediately proceeding the apprenticeship step during which, with the aerodyne stopped and aligned as well as possible along the axis of the runway, the computer determines the North speed and the East speed, the result of this calculation supplying the errors affecting these measurements, namely $\Delta$ VN0 and $\Delta$ VE0, these errors being then stored then subtracted from the values VE and VN calculated during the apprenticeship phase.

4. The method as claimed in one of the preceding claims, characterized in that it comprises for taking into account the evolution in time of the errors affecting the North and East speeds, a second additional step for measuring when stopped the errors affecting the North and East speeds, the estimation during the first additional step of the slope of Schüler's sinusoid in the time interval when take off is to take place and correction of the North and East speeds as a function of said slope.

5. The method as claimed in one of the preceding claims, characterized in that the apprenticeship step includes two Periods, namely :

– a first period between a time to when the aerodyne is stopped and a time t1 corresponding to a first predetermined speed, in which the synthetic runway aberration signal is not transmitted ; and

– a second period between time t1 and a time tfin marKing the end of the apprenticeship step, in which the end of the apprenticeship period may occur prematurely following malfunctions such as :

– a reduction of the speed of one of the critical engines of the aerodyne causing an important yaw torque,

– a reduction of the longitudinal speed of the aerodyne, making take off impossible if not dangerous,

– prohibitive lateral acceleration causing a deviation of the aerodyne,

– a reduction of the visibility causing the pilot to interrupt take off.

6. A device for implementing the method as claimed in one of the preceding claims, characterized in that it includes on board the aérodyne :

1) at least one inertial unit (1) adapted for delivering signals representative of at least the North speed (VN), the East speed (VE), the azimuth $\Psi$ of the aerodyne, as well possibly as a signal representative of its ground speed VG,

2) a computer (8, 9) comprising :

– means (8) for estimating, from the signals delivered by the unit, the transverse speed of the aerodyne,

– means (9) for determining the course error, connected to the output of the estimation means (8) by a first switch (SA₁) and connected to an input of said estimation means by a second switch (SB₂) ;

– control means generating a synthetic runway aberration signal, connected to the estimation means by means of the second switch (SB₁) ;

– said switches being designed so that the computer generates and stores, during the apprenticeship step, a realigned parameter of the axis of the runway and, during the second step, generates the synthetic runway aberration signal ; and

– means for guiding the aerodyne during the second step from the synthetic runway aberration signal.

7. The device as claimed in claim 6, characterized in that said means (9) for determining the course error comprise :

– means for calculating the aberration ($\Psi 0$) between the aerodyne and the axis of the runway by integrating the speed $\hat{v}t$ ;

– means for calculating the distance (D) travelled over the ground by the aerodyne by integrating the ground speed (VG) of the aerodyne ;

– means for determining at the end of the apprenticeship period, the course error $\Delta\Psi 0^*$ by means of a relation of the type

$$\Delta\Psi 0^* = \frac{\Psi 0^*}{D} \ ;$$

and in that the computer comprises means for the storage of this course error $\Delta\Psi 0^*$.

8. The device as claimed in claim 6, characterized in that said computer (8, 9) includes means for effecting, during the second step :

– correction of the transverse speed by the course error $\Delta\Psi 0^*$, and

– elaboration from this corrected transverse speed of the synthetic runway signal.

9. The device as claimed in one of claims 6 to 8, characterized in that said computer (8, 9) includes means for determining the errors affecting the North and East speeds determined by the unit during the first additional step preceding the apprenticeship step, during which the aerodyne, when stopped, is aligned along the axis of the runway and for deducting these errors from values ($V_{East}$) and ($V_{North}$) acquired during the apprenticeship phase.

10. The device as claimed in one of claims 6 to 9, characterized in that said computer (8, 9) includes means for estimating, during said first additional step, the slope of Schüler's sinusoid, in the interval of time when take off is to take place and for correcting the North and East speeds determined by the unit as a function of said slope.

11. The device as claimed in claim 6, characterized in that said computer includes an estimation unit (8) adapted for elaborating a signal representative of the transverse speed (Y') of the aerodyne from the azimuth, North speed and East speed information supplied by the unit (1) and means for correcting this transverse speed by the course error ($\Delta\Psi 0^*$), and a course error computing unit (9) which receives this signal representative of the transverse speed through a first switch (SA₁) and a signal representative of the ground speed (VG) of the aerodyne through a second switch (SA₂), these two switches (SA₁, SA₂) being adapted to pass to the closed condition during appli-

cation of a signal ($S_1$) marking the beginning of the apprenticeship step (time t0), and a circuit connecting the output of the computing unit (9) to the means for correcting the transverse speed of the estimation unit (8), this circuit including a switch ($SB_2$) passing to the closed state during application of a signal ($S_2$) which marks the end of the apprenticeship step.

12. The device as claimed in claim 11, characterized in that said estimation unit includes

– three storage units ($MEM_1$, $MEM_2$, $MEM_3$) controlled by said signal ($S_1$) which receive respectively information representative of the azimuth ($\Psi$), of the North speed (VN) and of the East speed (VE), elaborated by the unit (1),

– a first subtractor (26) whose positive input is connected to the output of the first storage unit ($MEM_1$), whose negative input is connected to switch ($SB_2$),

– a sine function generator (25) and a cosine function generator (24) connected to the output of the first subtractor (26),

– a second subtractor (27) whose negative input is connected to the output of the second storage unit ($MEM_2$) and whose positive input receives a signal representative of the North speed elaborated by the unit (1),

– a third subtractor (28) whose negative input is connected to the output of the third storage unit ($MEM_3$) and whose positive input receives a signal representative of the East speed from the unit (1),

– a first multiplier (29) whose two inputs are connected respectively to the output of the sine function generator (25) and to the output of said second subtractor (27),

– a second multiplier (30) whose two inputs are connected respectively to the output of the cosine function generator (24) and to the output of said third substractor (28), and

– a subtractor (31) whose positive input is connected to the output of the second multiplier (30) and whose negative input is connected to the output of the first multiplier (29).

13. The device as claimed in one of claims 11 and 12, characterized in that said unit calculating the aberration ($\Delta\Psi0^*$) includes two integrators ($I_1$, $I_2$) initialized at zero at the time of transmission of said signal ($S_1$) and connected respectively to said switches ($SA_1$ and $SA_2$) and a divider (Q) whose two inputs are connected respectively at the time of transmission of said signal ($S_2$) to the outputs of the two integrators ($I_1$ and $I_2$) and whose output is connected to a storage unit (M) controlled for storing the quotient $\dfrac{Y0*}{D}$ elaborated by the divider (Q) at the time of transmission of said signal ($S_2$).

14. The device as claimed in one of claims 1 to 13, characterized in that the output of said estimation unit (8) is connected to a control unit through a switch ($SB_1$) controlled by said signal ($S_2$).

15. The device as claimed in claim 14, characterized in that said control unit includes a summator (12) with three inputs, namely :

– a first input connected to the switch ($SB_1$) through an integrator (11) of function 1/s,

– a second input connected to the switch ($SB_1$) through a network (13) with time constant ($\tau_1$), and

– a third input which receives a signal representative of the second drift of the aerodyne/runway axis aberration through a network (14) with time constant ($\tau_2$).

16. The device as claimed in claim 15, characterized in that the summator (12) is connected by its output to means for guiding the aerodyne, through a switch ($SB_3$) controlled by the signal ($S_2$).

Axe de
la
piste

Azimut piste vu par
la centrale

Nord vrai

Nord IRS

Aérodyne $\gamma_0$

$\Delta\Psi_0$

D $\Psi_0$ $0,4°$

Arrêt en bout
de piste

## FIG.1

IRS

VNord

VEst

VG

$\Psi$

$r'_1$

Gyro
lacet

$r_1$

$\gamma'$
Vitesse
transversale

$\gamma''$

$\delta r$

## FIG.2

FIG.3

FIG.4

FIG.5